# EUROPÄISCHE PATENTSCHRIFT

(11) **EP 0 995 642 B1**
(45) Veröffentlichungstag und Bekanntmachung des Hinweises auf die Patenterteilung: **30.07.2003**
(21) Anmeldenummer: 99120099.9
(22) Anmeldetag: 21.10.1999
(51) Int. Cl.: B60R 21/16

(54) **Gassack für ein Fahrzeuginsassen- Rückhaltesystem**
Airbag for a vehicle passenger restraining system
Coussin de sécurité pour système de retenue de passager dans un véhicule

(30) Priorität: 23.10.1998 DE 29818946 U
(43) Veröffentlichungstag der Anmeldung: 26.04.2000
(73) Patentinhaber: TRW Occupant Restraint Systems GmbH & Co. KG, 73553 Alfdorf (DE)
(72) Erfinder: Ellerbrok, Norbert, 73553 Alfdorf (DE); Lang, Norbert, 73575 Leinzell (DE)
(74) Vertreter: Sties, Jochen, Dipl.-Ing.

(56) Entgegenhaltungen:
- EP-A- 0 798 169
- EP-A- 0 829 395
- DE-U- 29 721 678
- US-A- 5 573 270

## Beschreibung

Die Erfindung betrifft einen Gassack nach dem Oberbegriff des Anspruchs.

Das Gewebeteil dient dazu, das nach Aktivierung eines Gasgenerators in das Innere des Gassacks eintretende, heiße Druckgas in einer gewünschten Richtung umzulenken. Dies verhindert, daß das heiße Druckgas direkt auf die Wandung des Gassacks auftrifft und diese beschädigt. Weiterhin kann durch die gezielte Umlenkung des Druckgases das Entfaltungsverhalten des Gassacks in weitem Maße beeinflußt werden. Je nach der Richtung des Einströmens des Druckgases in den Gassack kann beispielsweise erreicht werden, daß der Gassack sich zuerst in seitlicher Richtung entfaltet, insbesondere nach oben und nach unten zur Windschutzscheibe und zum Boden des Fahrzeugs hin, und erst gegen Ende des Entfaltungsvorgangs zum Fahrzeuginsassen hin.

Das Fangband dient dazu, die Form und die Abmessungen des Gassacks insbesondere im entfalteten Zustand zu beeinflussen. Weiterhin kann mittels des Fangbandes auch das Entfaltungsverhalten des Gassacks beeinflußt werden. Problematisch ist aber, daß das Fangband sich negativ auf das Entfaltungsverhalten auswirken kann, das mittels des Gewebeteils zu erhalten versucht wird.

Die EP 829 395 A1 offenbart einen Gassack mit einem Gewebeteil, das im Inneren des Gassacks gegenüber der Einblasöffnung angeordnet ist, und mit einem Fangband, das im Inneren des Gassacks so angeordnet ist, daß es nicht vom Druckgas angeströmt wird. Die Fangbänder sind einstuckig mit dem Gewebeteil an gegenüber-Liegenden seiten ansgebildet.

Die Erfindung schafft einen Gassack, bei dem das Fangband keine negative Auswirkung auf das Entfaltungsverhalten des Gassacks hat, das mittels des Gewebeteils vorgegeben wird. Gemäß der Erfindung wird dies durch einen Gassack nach Anspruch 1 erreicht. Dies gewährleistet, daß das Fangband nicht vor der Ausströmöffnung liegt und dadurch die Ausströmgeschwindigkeit und die Ausströmrichtung des Druckgases aus dem von dem Gewebeteil abgegrenzten Volumen nachteilig ändert, beispielsweise indem die Öffnung abgedeckt wird.

Vorteilhafte Ausgestaltungen der Erfindung ergeben sich aus dem unteranspruch.

Die Erfindung wird nachfolgend unter Bezugnahme auf bevorzugte Ausführungsformen beschrieben, die in den beigefügten Zeichnungen dargestellt sind. In diesen zeigen:
- Figur 1 in einer perspektivischen Ansicht einen Gassack nach dem stand der Technik mit Fangband;
- Figur 2 in einer perspektivischen Ansicht den Gassack von Figur 1 mit Fangband und Gewebeteil;
- Figur 3 in einer perspektivischen Ansicht einen erfindungsgemäße Gassack mit Fangband und Gewebeteil, wobei das Fangband und das Gewebeteil einstückig ausgeführt sind;
- Figur 4 in einer Draufsicht den Zuschnitt für das Fangband und das Gewebeteil von Figur 3;
- Figur 5 in einer perspektivischen Ansicht einen Gassack mit Fangband und Gewebeteil gemäß einer weiteren Ausführungsform.

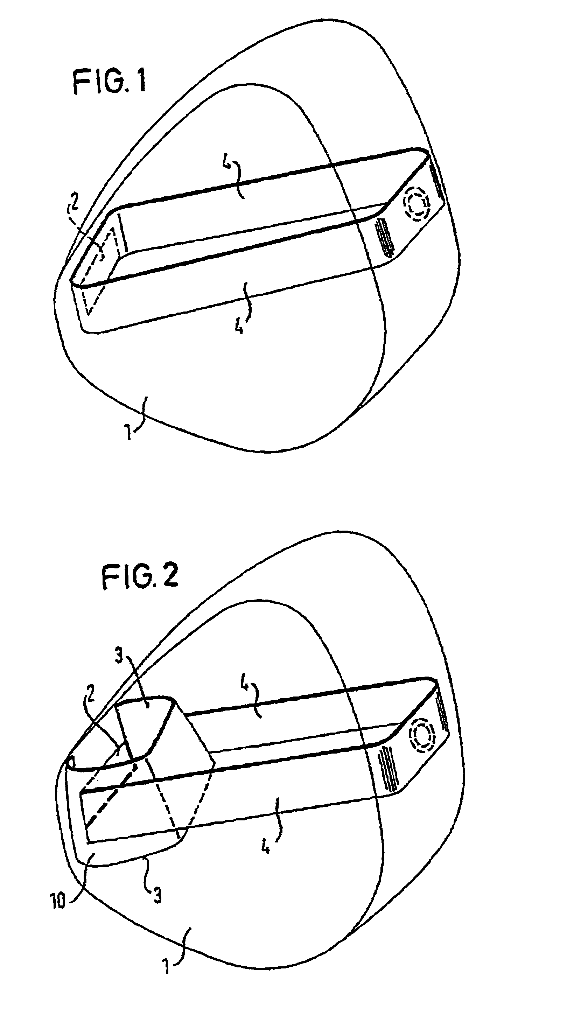

In den Figuren 1 und 2 ist der grundsätzliche Aufbau eines Gassacks nach dem Stand der Technik zu sehen. Der Gassack 1 weist eine Einblasöffnung 2 auf, durch die hindurch Druckgas in das Innere des Gassacks eingebracht werden kann, um den Gassack zu entfalten.

Im Inneren des Gassacks ist ein Gewebeteil 10 so angeordnet, daß es eine Art Vorkammer bildet, in die das Druckgas eintritt, das durch die Einblasöffnung einströmt. Aus dieser Vorkammer strömt das Druckgas durch zwei Ausströmöffnungen 3 in den Gassack ein.

Im Inneren des Gassacks sind außerdem zwei Fangbänder 4 angeordnet. Diese verbinden bei dieser Ausführungsform den die Einblasöffnung umgebenden Wandungsbereich des Gassacks mit dem Bereich der Wandung, der einem zurückzuhaltenden Fahrzeuginsassen zugewandt ist.

Ein wesentliches Merkmal besteht darin, daß die Fangbänder außerhalb des Bereichs angeordnet sind, in dem das Druckgas aus der Vorkammer in den Gassack einströmt. Bei der Ausführungsform der Figuren 1 und 2 sind die Fangbänder seitlich am Gewebeteil 10 angeordnet, so daß sie in einer Ebene liegen, die senkrecht zu der Ebene ist, in der die Mittelpunkte der Ausströmöffnungen 3 liegen. Aufgrund dieser Anordnung besteht auch während des Entfaltens des Gassacks keinerlei Gefahr, daß die Fangbänder vor die Ausströmöffnungen 3 geraten und dadurch das Ausströmen des Druckgases aus der Vorkammer behindern oder negativ beeinflussen. Es bleibt also das konstruktiv vorgesehene Ausströmverhalten aus der Vorkammer erhalten, so daß sich der Gassack in der gewünschten Weise entfaltet. Es kann insbesondere vorgesehen sein, daß sich der Gassack, bedingt duch die nach oben und nach unten gerichteten Ausströmöffnungen, erst zur Windschutzscheibe bzw. zum Fahrzeugboden hin entfaltet und erst dann zum Fahrzeuginsassen hin.

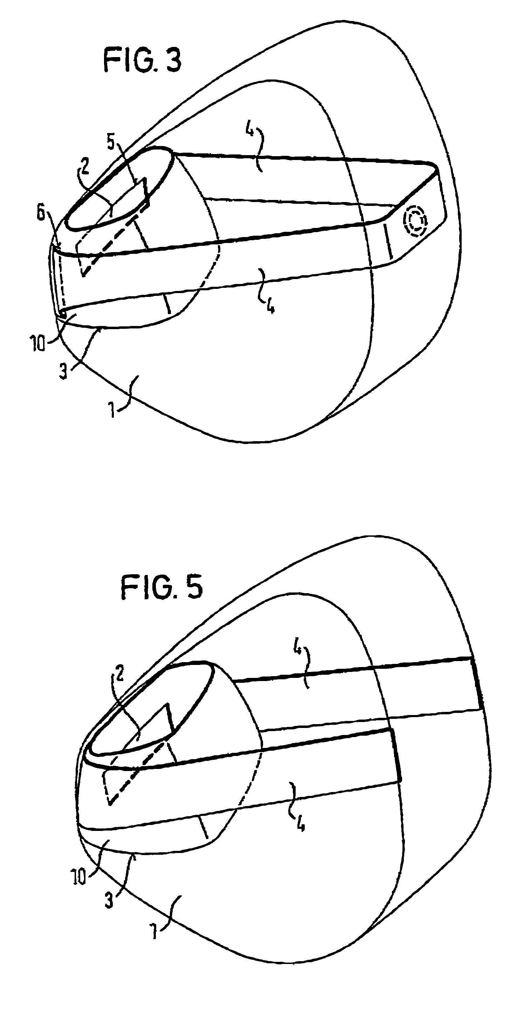

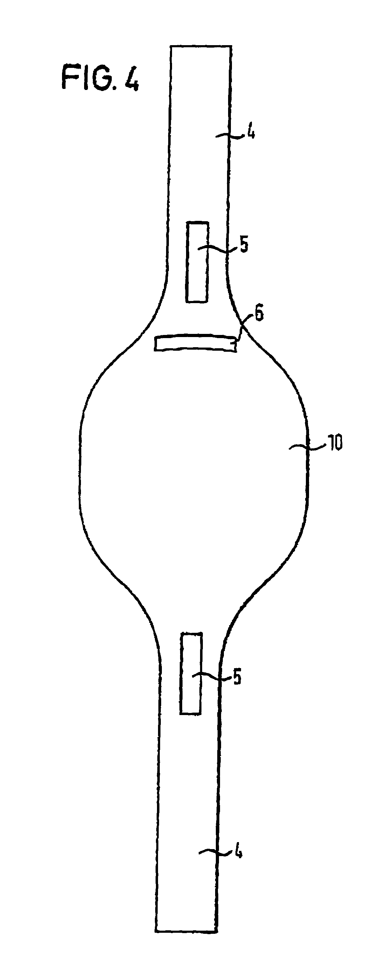

In Figur 3 ist ein erfindungsgemäßer Gassack gezeigt, bei dem das Gewebeteil und die Fangbänder einstückig ausgebildet sind (siehe auch Figur 4). Die Fangbänder sind an einander gegenüberliegenden Seiten des Gewebeteils 10 angeordnet. Zwischen den Fangbändern und dem Gewebeteil ist jeweils ein Verstärkungsbereich ausgebildet, der mit einer Aussparung 5 versehen ist, deren Abmessungen denjenigen der Einblasöffnung 2 entsprechen. Schließlich ist im Bereich zwischen einem Verstärkungsbereich und dem Gewebeteil eine Öffnung 6 ausgebildet, die für den Durchtritt des auf der anderen Seite angeordneten Fangbandes dient.

Die Fangbänder und das Gewebeteil verlaufen in der folgenden Weise: Das Gewebeteil ist nach Art eines Ringes gelegt, so daß die beiden Verstärkungsbereiche derart aufeinanderliegen, daß die Aussparungen 5 mit der Einblasöffnung zusammenfallen. Eines der Fangbänder erstreckt sich dabei durch die Öffnung 6 hindurch. Somit steht von dem ringförmigen Gewebeteil 10, das die Vorkammer bildet, auf beiden Seiten jeweils ein Fangband ab. Das Gewebeteil ist mit dem die Einblasöffnung umgebenden Wandungsbereich des Gassacks vernäht oder durch beispielsweise einen Haltering verbunden. Die freien Enden der Fangbänder sind mit dem Bereich der Wandung des Gassacks vernäht, der einem zurückzuhaltenden Fahrzeuginsassen zugewandt ist.

In Figur 5 ist eine weitere Ausführungsform gezeigt. Im Unterschied zur Ausführungsform gemäß Figur 3 sind die Fangbänder nicht mittig mit dem Bereich der Wandung des Gassacks vernäht, der einem zurückzuhaltenden Fahrzeuginsassen zugewandt ist, sondern seitlich im Bereich der Naht, die die Seitenteile der Wandung des Gassacks mit dem zentralen Wandungsteil verbindet.

## Patentansprüche

1. Gassack (1) für ein Fahrzeuginsassen-Rückhaltesystem, mit einer Einblasöffnung (2), einem Gewebeteil (10), das im Inneren des Gassacks (1) gegenüber der Einblasöffnung (2) angeordnet ist und eine Ausströmöffnung (3) für Druckgas bildet, das durch die Einblasöffnung (2) in den Gassack (1) einströmt, und Fangbändern (4) die ebenfalls im Inneren des Gassacks so angeordnet sind, daß sie im wesentlichen nicht von Druckgas angeströmt werden, das durch die Ausströmöffnung (3) aus dem vom Gewebeteil (10) umschlossenen Volumen ausströmt, wobei die Fangbänder (4) und das Gewebeteil (10) aus einem Gewebezuschnitt bestehen und die Fangbänder (4) an einander gegenüberliegenden Seiten des Gewebeteils (10) ausgebildet sind, **dadurch gekennzeichnet, daß** zwischen den Fangbändern (4) und dem Gewebeteil (10) jeweils ein Verstärkungsbereich ausgebildet ist, der mit einer Aussparung (5) versehen ist, deren Abmessungen denjenigen der Einblasöffnung (2) entsprechen, und daß die beiden Verstärkungsbereiche derart aufeinanderliegen, daß die Aussparungen (5) mit der einblasöffnung (2) zusammenfallen.

2. Gassack nach Anspruch 1, **dadurch gekennzeichnet, daß** im Bereich zwischen einem Verstärkungsbereich und dem Gewebeteil (10) eine Öffnung (6) ausgebildet ist, die dem Durchtritt des auf der anderen Seite angeordneten Fangbandes (4) dient.

## Claims

1. A gas bag (1) for a vehicle occupant restraint system, comprising an inflation opening (2), a fabric piece (10) which is arranged inside the gas bag (1) opposite the inflation opening (2) and forms an outflow opening (3) for compressed gas which flows through the inflation opening (2) into the gas bag (1), and tethers (4) which are likewise arranged inside the gas bag such that compressed gas which flows out through the outflow opening (3) from the volume enclosed by the fabric piece (10) substantially does not flow against the tethers (4), the tethers (4) and the fabric piece (10) consisting of one fabric blank and the tethers (4) being formed on opposite sides of the fabric piece (10), **characterized in that** between the tethers (4) and the fabric piece (10) one reinforcement region each is configured which is provided with a recess (5) the dimensions of which correspond to those of the inflation opening (2), and that the two reinforcement regions lie one on top of the other such that the recesses (5) coincide with the inflation opening (2).

2. The gas bag according to Claim 1, **characterized in that** in the region between a reinforcement region and the fabric piece (10) an opening (6) is formed which serves for the passage of the tether (4) arranged on the other side.

## Revendications

1. Coussin à gaz (1) pour un système de retenue d'occupants d'un véhicule, comportant un orifice d'insufflation (2), une pièce de tissu (10) qui est agencée à l'intérieur du coussin à gaz (1) en vis-à-vis de l'orifice d'insufflation (29 et qui forme un orifice de sortie d'écoulement (3) pour le gaz sous pression qui s'écoule à travers l'orifice d'insufflation (2) dans le coussin à gaz (1), et des bandes de garde (4) qui sont également agencées à l'intérieur du coussin à gaz (1) de telle sorte qu'elles ne sont sensiblement pas soufflées par le gaz sous pression qui s'écoule à travers l'orifice de sortie d'écoulement (3) hors du volume entouré par la pièce de tissu (10), les bandes de garde (4) et la pièce de tissu (10) étant constituées à partir d'une pièce découpée, et les bandes de garde (4) étant réalisées sur des côtés opposés l'un à l'autre de la pièce de tissu (10), **caractérisé en ce que** entre les bandes de garde (4) et la pièce de tissu (10) est formé une zone de renforcement respective qui est pourvue d'un évidement (5) dont les dimensions correspondent à celles de l'orifice d'insufflation (2); et **en ce que** les deux zones de renforcement sont situées l'une par rapport à l'autre de telle sorte que les évidements (5) coïncident avec l'orifice d'insufflation (2).

2. Coussin à gaz selon la revendication 1, **caractérisé en ce que** dans la zone entre une zone de renforcement et la pièce de tissu (10) est réalisée une ouverture (6) qui sert à faire passer la bande de garde (4) agencée de l'autre côté.
